# EUROPEAN PATENT APPLICATION

(11) **EP 3 015 149 A2**
(43) Date of publication of application: **04.05.2016**
(21) Application number: 15164495.2
(22) Date of filing: 21.04.2015
(51) Int. Cl.: A63H 33/06

(54) **JOINT ASSEMBLY AND JOINT APPARATUS HAVING THE SAME**

(30) Priority: 03.11.2014 TW 103138061
(71) Applicant: Genius Toy Taiwan Co., Ltd., 403 Taichung City (TW)
(72) Inventor: Lin, Wen-Bang, 401 Taichung City (TW)
(74) Representative: BSB Intellectual Property Law

(57) **Abstract**

A joint assembly (4) includes a stud (40), an inner casing (43) and an outer casing (44). The stud (40) includes a rod segment (41) and a ball segment (42). The rod segment (41) extends along a first axis (L1) and has opposite first and second ends (411, 412). The ball segment (42) is connected co-movably to the first end (411) of the rod segment (41). The inner casing (43) is mounted around the stud (40) and rotatable relative to the stud (40) about the first axis (L1), and has a second axis (L2) perpendicular to the first axis (L1). The outer casing (44) is mounted around the inner casing (43) and rotatable relative to the inner casing (43) about the second axis (L2). The second end (412) of the rod segment (41) of the stud (40) extends out from the outer casing (44).

## Description

The disclosure relates to a joint assembly, more particularly to a joint assembly that interconnects two toy blocks.

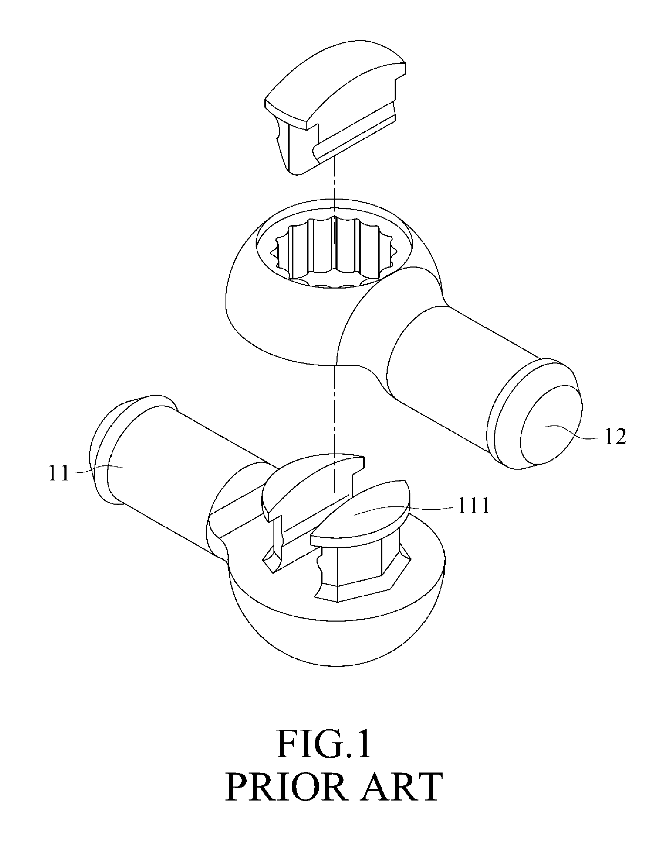

Referring to Fig. 1, a conventional joint assembly includes a first component 11 having a pivoting portion 111, and a second component 12 connected pivotally to the pivoting portion 111 of the first component 11. However, the second component 12 has only one rotational degree of freedom relative to the first component 11.

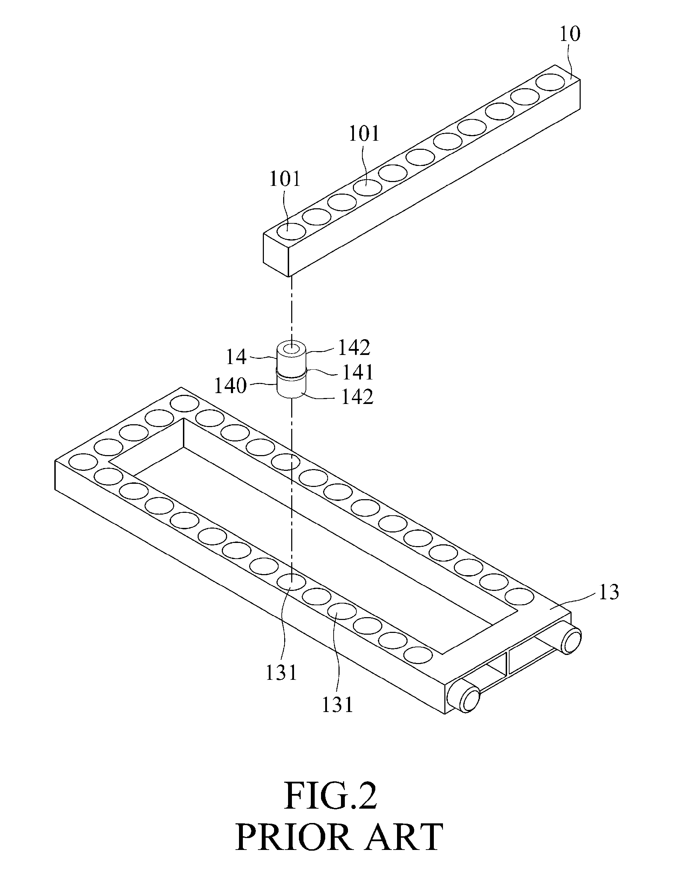

Referring to Fig. 2, a conventional connector assembly includes a first female component 10, a second female component 13 and a male component 14. Each of the first and second female components 10, 13 has a plurality of connecting holes 101, 131. The male component 10 has a cylindrical main body 140, and a flange 141 extending outwardly from a central portion of the main body 140 and dividing the main body 140 into two opposite engaging portions 142. The engaging portions 142 are respectively inserted into one of the connecting holes 101 of the first female component 10 and one of the connecting holes 131 of the second female component 13 so as to interconnect the first and second female components 10, 13. However, both of the first and second female components 10, 13 are rotatable relative to the male component 14, so that the first and second female components 10, 13 are rotatable relative to each other. Moreover, when one of the first and second female components 10, 13 is separated from the male component 14, it is difficult to apply a force on the male component 14 to separate the male component 14 and the other one of the first and second female components 10, 13.

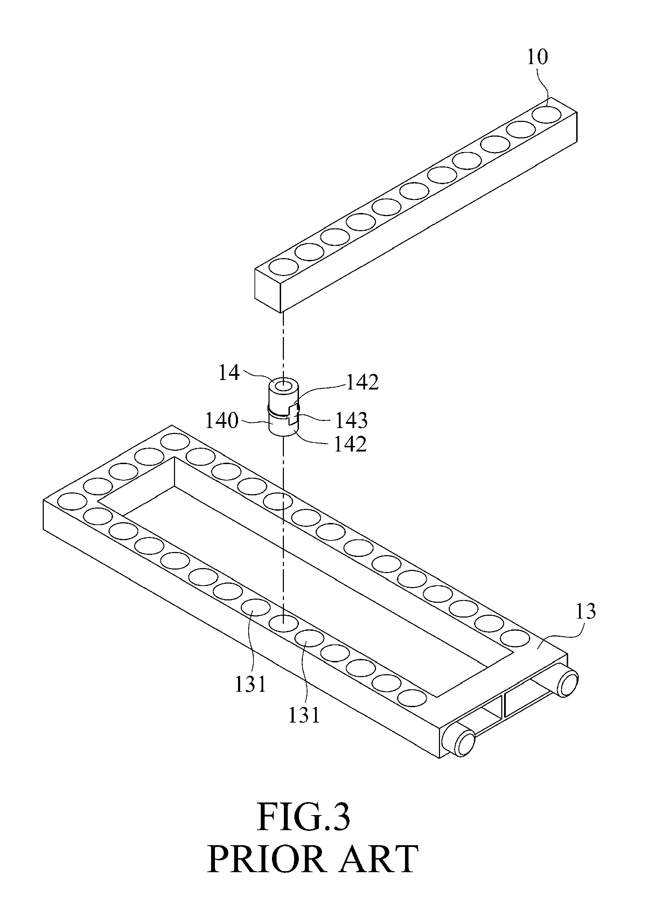

Referring to Fig. 3, another conventional connector assembly includes a first female component 10, a second female component 13 and a male component 14 similar to those of the abovementioned conventional connector assembly. The male component 14 is further formed with a picking groove 143, such that when one of the first and second female components 10, 13 is separated from the male component 14, a pinch bar (not shown) is inserted into the picking groove 143 to apply a force on the male component 14 to separate the male component 14 and the other one of the first and second female components 10, 13. However, the first and second female components 10, 13 are still rotatable relative to each other when being interconnected by the male component 14.

Therefore, the object of the present disclosure is to provide a joint assembly that can overcome at least one of the aforesaid drawbacks associated with the prior arts.

Accordingly, a joint assembly of the present disclosure includes a stud, an inner casing and an outer casing. The stud includes a rod segment and a ball segment. The rod segment extends along a first axis, and has opposite first and second ends that are disposed along the first axis. The ball segment of the stud is connected co-movably to the first end of the rod segment. The inner casing is mounted around the stud and rotatable relative to the stud about the first axis, and has a second axis that is perpendicular to the first axis. The outer casing is mounted around the inner casing and rotatable relative to the inner casing about the second axis. The second end of the rod segment of the stud extends out from the outer casing.

Another obj ect of the present disclosure is to provide a snap-fit connector that can overcome at least one of the aforesaid drawbacks associated with the prior arts.

Accordingly, a snap-fit connector of the present disclosure includes a joint assembly, a first female component and a male component. The joint assembly includes a stud, an inner casing and an outer casing. The stud includes a rod segment and a ball segment. The rod segment extends along a first axis, and has opposite first and second ends that are disposed along the first axis. The ball segment of the stud is connected co-movably to the first end of the rod segment. The inner casing is mounted around the stud and rotatable relative to the stud about the first axis, and has a second axis that is perpendicular to the first axis. The outer casing is mounted around the inner casing and rotatable relative to the inner casing about the second axis. The second end of the rod segment of the stud extends out from the outer casing. The first female component is connected co-movably to one of the stud and the outer casing of the joint assembly, and includes a main body, and at least one through hole that is formed through the main body. The through hole has opposite and non-circular first and second end hole sections, and a central hole section that communicates spatially the first and second end hole sections and that has a size smaller than those of the first and second end hole sections. The main body has first and second abutment surfaces that respectively define the first and second end hole sections. The male component has a main body, spaced-apart first and second flanges that extend outwardly from the main body, and a first engaging structure that extends from the first flange and away from the second flange. The first engaging structure is inserted into the central hole section via the first end hole section. The first flange abuts against the first abutment surface for preventing rotation of the male component relative to the first female component. The second flange is spaced apart from the first female component.

Still another object of the present disclosure is to provide a snap-fit connector module that can overcome at least one of the aforesaid drawbacks associated with the prior arts.

Accordingly, a snap-fit connector module of the present disclosure includes a joint assembly, a first female component, a male component and a pinch bar. The joint assembly includes a stud, an inner casing and an outer casing. The stud includes a rod segment and a ball segment. The rod segment extends along a first axis, and has opposite first and second ends that are disposed along the first axis. The ball segment of the stud is connected co-movably to the first end of the rod segment. The inner casing is mounted around the stud and rotatable relative to the stud about the first axis, and has a second axis that is perpendicular to the first axis. The outer casing is mounted around the inner casing and rotatable relative to the inner casing about the second axis. The second end of the rod segment of the stud extends out from the outer casing. The first female component is connected co-movably to one of the stud and the outer casing of the joint assembly, and includes a main body, and at least one through hole that is formed through the main body. The through hole has opposite and non-circular first and second end hole sections, and a central hole section that communicates spatially the first and second end hole sections and that has a size smaller than those of the first and second end hole sections. The main body has first and second abutment surfaces that respectively define the first and second end hole sections. The male component has a main body, spaced-apart first and second flanges that extend outwardly from the main body, and a first engaging structure that extends from the first flange and away from the second flange. The first engaging structure is inserted into the central hole section via the first end hole section. The first flange abuts against the first abutment surface for preventing rotation of the male component relative to the first female component. The second flange is spaced apart from the first female component. The pinch bar is operable to be inserted into a space between the first and second flanges, and to apply a force to the second flange for separating the male component from the first female component.

Other features and advantages of the present disclosure will become apparent in the following detailed description of the embodiments with reference to the accompanying drawings, of which:
Fig. 1 is an exploded perspective view of a conventional joint assembly;
Fig. 2 is an exploded perspective view of a conventional connector assembly;
Fig. 3 is an exploded perspective view of another conventional connector assembly;
Fig. 4 is a perspective view of a first embodiment of a joint apparatus according to the disclosure;
Fig. 5 is a partly exploded perspective view of the first embodiment;
Fig. 6 is an exploded perspective view of an inner casing of a joint assembly of the first embodiment;
Fig. 7 is a front view of the inner casing of the first embodiment;
Fig. 8 is a sectional view of the joint assembly of the first embodiment taken along line VIII-VIII in Fig. 4;
Fig. 9 is a fragmentary sectional view of the joint assembly of the first embodiment taken along line IX-IX in Fig. 4;
Fig. 10 is a schematic assembled perspective view of the first embodiment;
Fig. 11 is another schematic assembled perspective view of the first embodiment;
Fig. 12 is a partly exploded perspective view of a second embodiment of the joint apparatus according to the disclosure;
Fig. 13 is a partly exploded perspective view of a third embodiment of the joint apparatus according to the disclosure;
Fig. 14 is a fragmentary assembled sectional view of the third embodiment;
Fig. 15 is a partly exploded schematic perspective view of the third embodiment;
Fig. 16 is a schematic top view of the third embodiment illustrating a pinch bar being operated to separate male and female components;
Fig. 17 is a schematic side view of the third embodiment illustrating the pinch bar being operated to separate the male and female components;
Fig. 18 is a schematic sectional view of the third embodiment illustrating the pinch bar being operated to separate the male and female components; and
Fig. 19 is a schematic perspective view of a toy assembly including the embodiments of this disclosure.

Before the present disclosure is described in greater detail, it shouldbe noted that like elements are denoted by the same reference numerals throughout the disclosure.

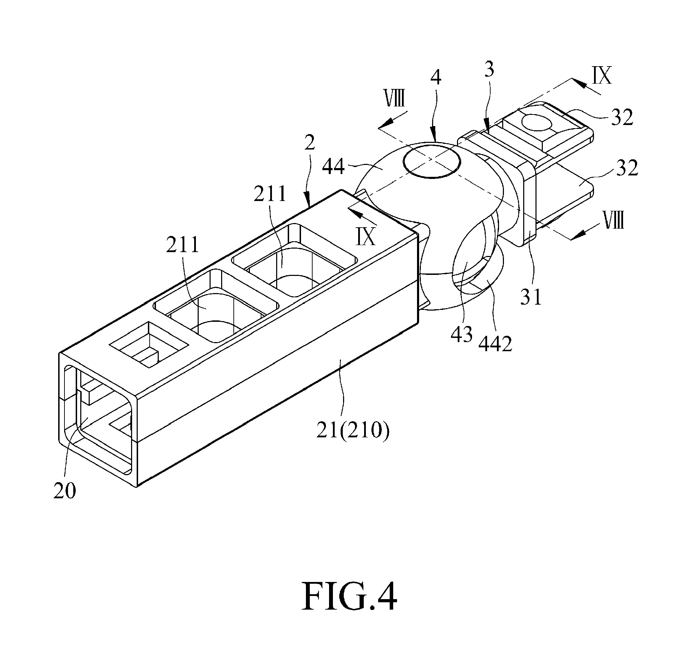

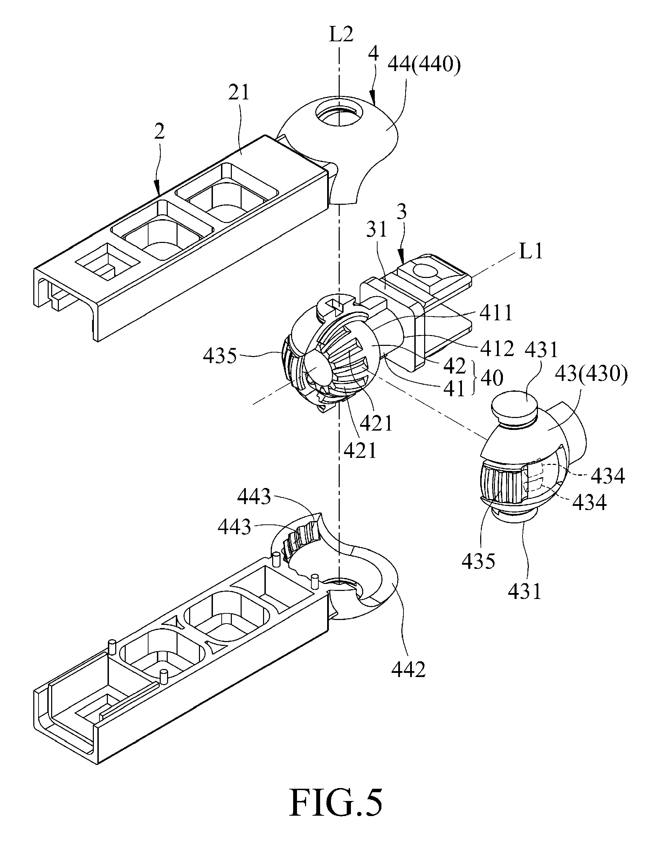

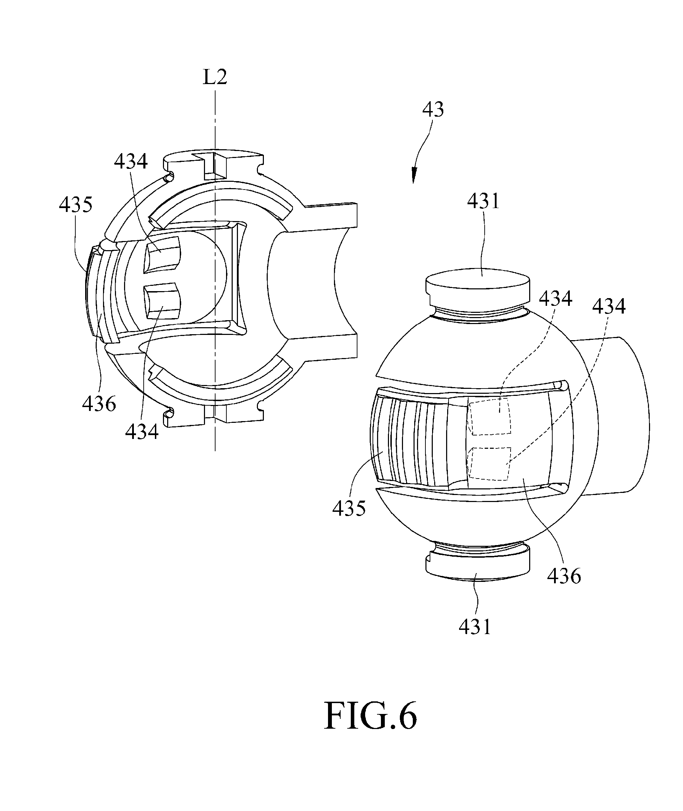

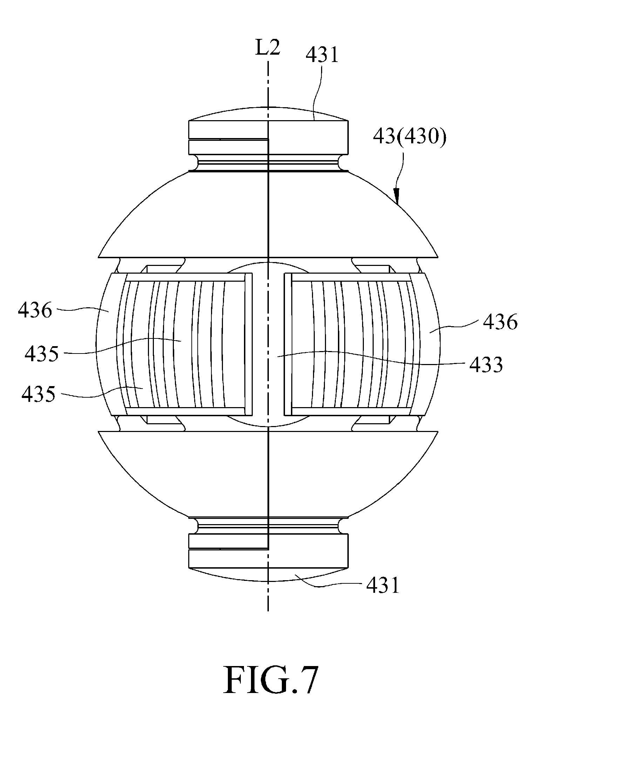

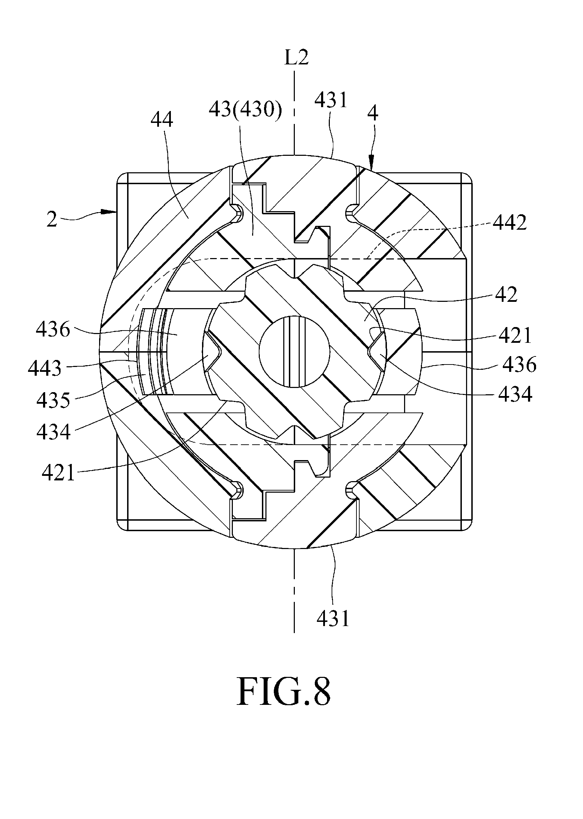

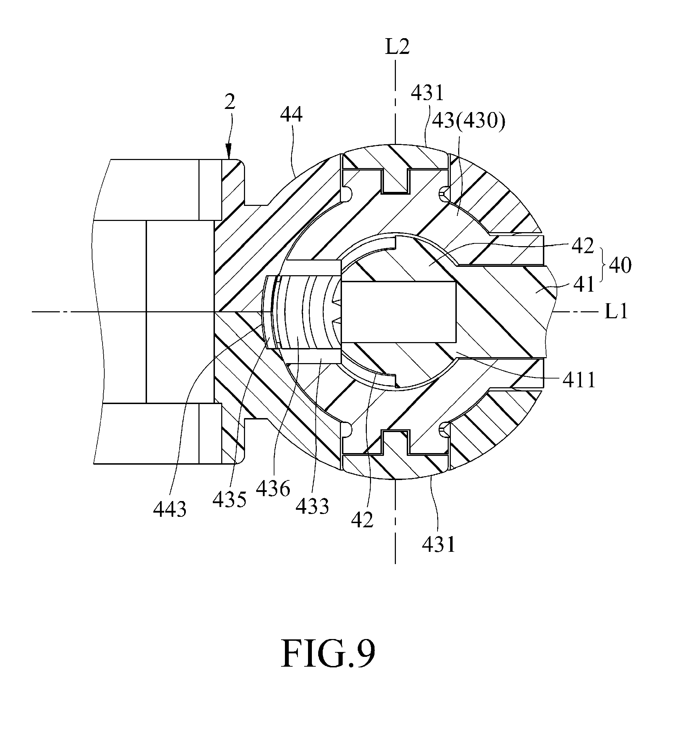

As shown in Figs. 4 to 9, a first embodiment of a joint apparatus according to the present disclosure includes a snap-fit connector 2, a connecting member 3 and a joint assembly 4.

The snap-fit connector 2 includes a female component 21 that has a main body 210, two through holes 211 formed through the main body 210, and a connecting hole 20 formed in an end surface of the main body 210.

The connecting member 3 has a base 31, and two spaced-apart barbs 32 that extend from the base 31.

The joint assembly 4 interconnects the female component 21 and the connecting member 3 to form a toy assembly, and includes a stud 40, an inner casing 43 and an outer casing 44.

The stud 40 includes a rod segment 41 andaball segment 42. The rod segment 41 extends along a first axis (L1), and has opposite first and second ends 411, 412 that are disposed along the first axis (L1). The second end 412 of the rod segment 41 is connected co-movably to one of the female component 21 and the connecting member 3. In this embodiment, the second end 412 of the rod segment 41 is connected co-movably and integrally to the base 31 of the connecting member 3.

The ball segment 42 of the stud 40 is connected co-movably to the first end 411 of the rod segment 41, and has a plurality of spaced-apart first positioning structures 421 that are arranged about the first axis (L1). In this embodiment, each of the first positioning structures 421 is configured as a groove.

The inner casing 43 is mounted around the stud 40 and rotatable relative to the stud 40 about the first axis (L1), and has a second axis (L2), a casing body 430, two axle portions 431, four second positioning structures 434 and six third positioning structures 435. In this embodiment, the inner casing 43 consists of two casing halves.

The second axis (L2) is perpendicular to the first axis (L1).

The casing body 430 has a main portion that is formed with a through groove 433 extending about the second axis (L2), and two resilient plates 436 that are connected to the main portion and disposed in the through groove 433. In a variation of the embodiment, the casing body 430 may have only one resilient plate 436 connected to the main portion and disposed in the through groove 433.

The axle portions 431 are disposed respectively on two opposite sides of the casing body 430 along the second axis (L2), and extend along the second axis (L2).

Two of the second positioning structures 434 are provided on an inner surface of one of the resilient plates 436. The other two of the second positioning structures 434 are provided on an inner surface of the other one of the resilient plates 436. Each of the second positioning structures 434 engages removably one of the first positioning structures 421 for positioning the inner casing 43 relative to the stud 40. In this embodiment, each of the second positioning structures 434 is configured as an engaging block.

The third positioning structures 435 are spaced apart from each other and arranged about the second axis (L2) . Three of the third positioning structures 435 are provided on an outer surface of one of the resilient plates 436. The other three of the third positioning structures 435 are provided on an outer surface of the other one of the resilient plates 436. In this embodiment, each of the third positioning structures 435 is configured as an engaging block.

The outer casing 44 is mounted around the inner casing 43, and is connected co-movably to the other one of the female component 21 and the connecting member 3. In this embodiment, the outer casing 44 is connected co-movably to an end of the female component 21 distal from the connecting hole 20, and is connected rotatably to the inner casing 43 via the axle portions 431 such that the outer casing 44 is rotatable relative to the inner casing 43 about the second axis (L2).

The outer casing 44 has a casing body 440 and a plurality of fourth positioning structures 443. The casing body 440 is formed with an arced through groove 442 centered at the second axis (L2) and extending by 120 degrees. The through groove 442 permits the stud 40 to extend therethrough and to move therewithin, so as to limit the rotation of the outer casing 44 relative to the inner casing 43. It is noted that the through groove 442 may extend by a different angle so as to adjust the limitation of the rotation of the outer casing 44 relative to the inner casing 43.

The fourth positioning structures 443 are provided on an inner surface of the casing body 440, and are arranged about the second axis (L2). Each of the third positioning structures 435 engages removably one of the fourth positioning structures 443 so that the outer casing 44 is positioned relative to the inner casing 43. In this embodiment, each of the fourth positioning structures 443 is configured as a groove.

In this embodiment, the outer casing 44 is co-rotatable with the inner casing 43 relative to the stud 40 about the first axis (L1), and is rotatable relative to the inner casing 43 about the second axis (L2), such that the female component 21 has two rotational degrees of freedom relative to the connecting member 3 via the joint assembly 4. Moreover, the female component 21 can be retained at a specific angle relative to the connecting member 3 through the engagement between the first and second positioning structures 421, 434 and between the third and fourth positioning structures 435, 442.

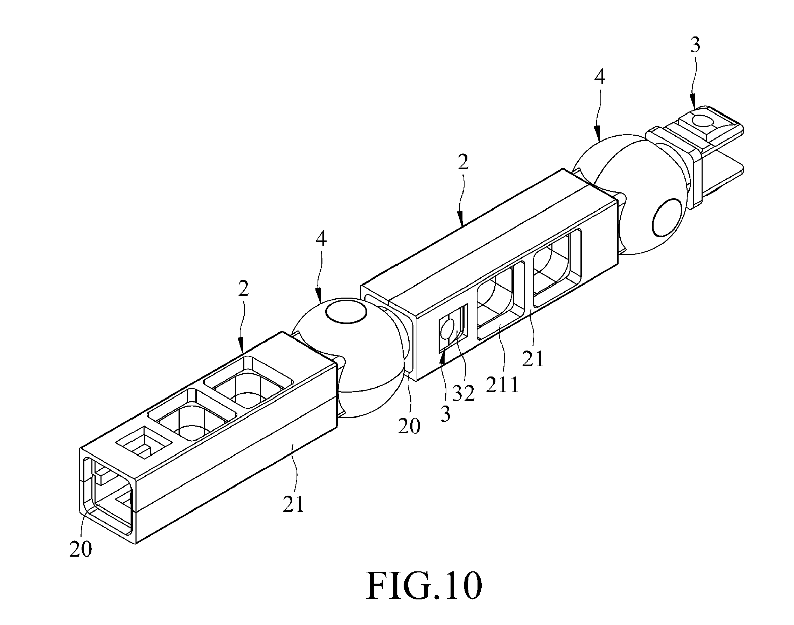

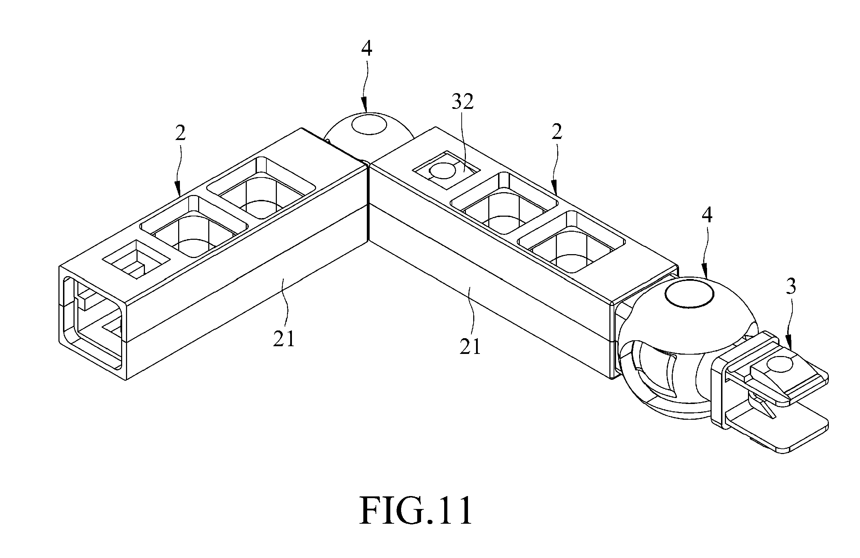

Referring further to Figs. 10 and 11, two of the toy assemblies each consisting a female component 21, a j oint assembly 4 and a connecting member 3 can be connected in series where the connecting member 3 of one of the toy assemblies engages the connecting hole 20 of the other one of the toy assemblies, and can form different shapes through the joint assembly 4 of each of the toy assemblies.

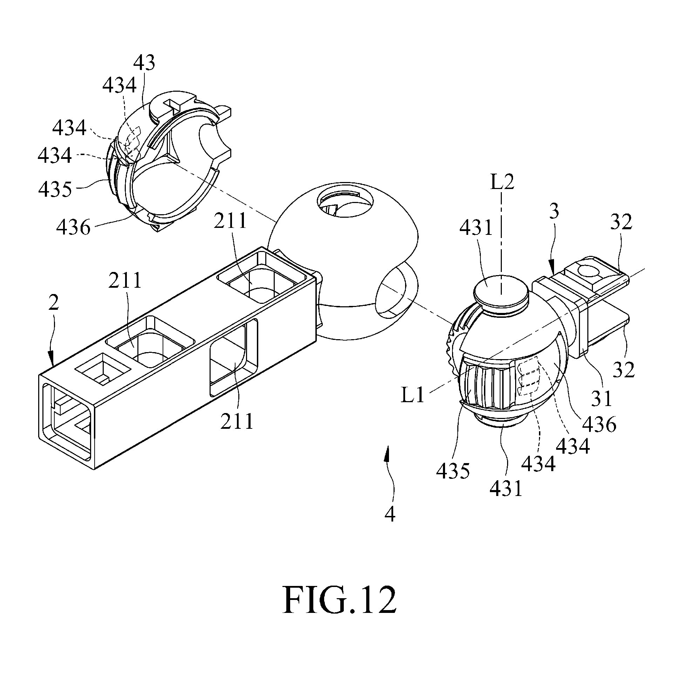

Referring to Fig. 12, a second embodiment of the joint apparatus according to the present disclosure is similar to the first embodiment. The differences between the first and second embodiments reside in that: the female component 21 has three through holes 211 that extend in different directions; and the inner casing 43 of the joint assembly 4 has six second positioning structures 434.

Three of the second positioning structures 434 are provided on the inner surface of one of the resilient plates 436. The other three of the second positioning structures 434 are provided on the inner surface of the other one of the resilient plates 436. It is noted that the numbers of the second and third positioning structures 434, 435 and the number of the through holes 211 of the female component 21 can be varied in a variation of this embodiment.

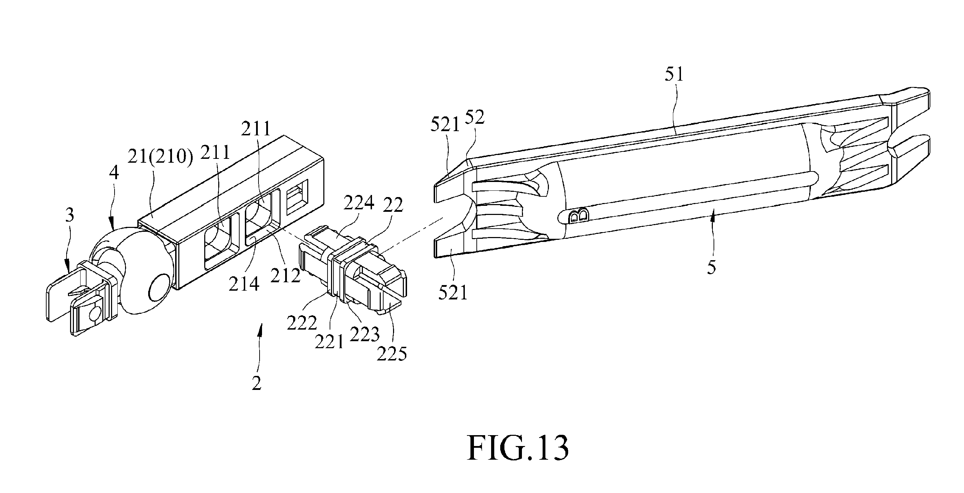

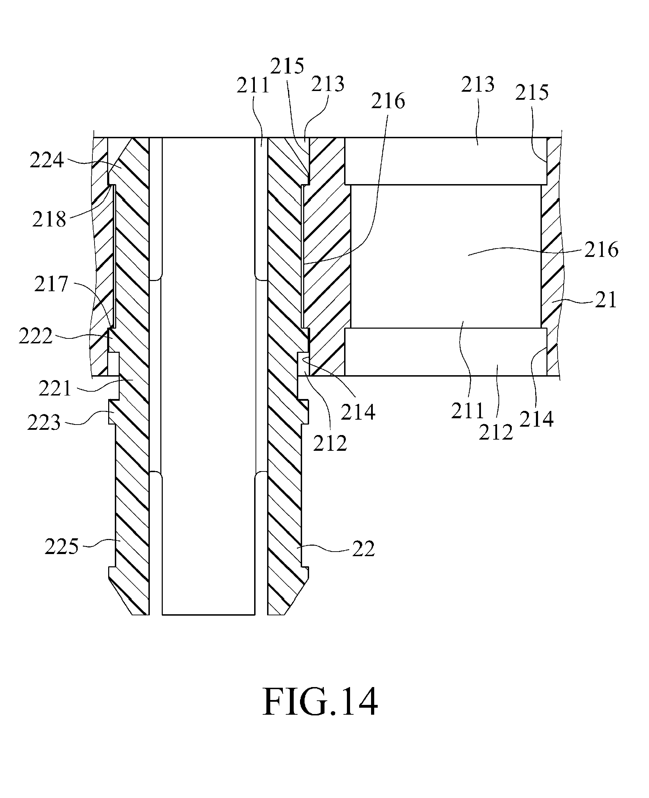

Referring to Figs. 13 and 14, a third embodiment of the joint apparatus according to the present disclosure includes a snap-fit connector 2, a connecting member 3, a joint assembly 4 and a pinch bar 5. The connecting member 3 and the joint assembly 4 of this embodiment are the same to the connecting member 3 and the joint assembly 4 of the first embodiment.

The snap-fit connector 2 includes a first female component 21 and a male component 22.

The first female component 21 is connected co-movably to one of the stud 40 and the outer casing 44 of the joint assembly 4, and includes a main body 210, and two through holes 211 that are formed through the main body 210. Each of the through holes 211 has opposite and non-circular first and second end hole sections 212, 213, and a central hole section 216 that communicates spatially the first and second end hole sections 212, 213 and that has a size smaller than those of the first and second end hole sections 212, 213. In this embodiment, the first and second end hole sections 212, 213 of each of the through holes 211 are rectangular. The main body 210 has first and second abutment surfaces 214, 215 that respectively define the first and second end hole sections 212, 213, a first shoulder surface 217 that is formed between the first end hole section 212 and the central hole section 216, and a second shoulder surface 218 that is formed between the second end hole section 213 and the central hole section 216.

The male component 22 has a main body 221, spaced-apart first and second flanges 222, 223 that extend outwardly from the main body 221, a first engaging structure 224 that extends from the first flange 222 and away from the second flange 223, and a second engaging structure 225 that extends from the second flange 223 and away from the first flange 222.

The first flange 222 has a shape the same as that of the first end hole section 212. The second flange 223 has a shape the same as that of the first flange 222. In this embodiment, the first and second flanges 222, 223 are rectangular.

The first engaging structure 224 of the male component 22 includes four resilient barbs. The second engaging structure 225 also includes four resilient barbs. In a variation of this embodiment, each of the first and second engaging structures 224, 225 may include only two spaced-apart resilient barbs.

The first engaging structure 224 is inserted into the central hole section 216 via the first end hole section 212 such that: the first flange 222 is retained complementarily in the first end hole section 212 and abuts against the first abutment surface 214 for preventing rotation of the male component 22 relative to the first female component 21; the second flange 223 is spaced apart from the first female component 21; the first flange 222 further abuts against the first shoulder surface 217 of the main body 210 of the first female component 21; and the resilient barbs are hooked removably on the second shoulder surface 218 of the main body 210 of the first female component 21 for preventing movement of the male component 22 relative to the first female component 21.

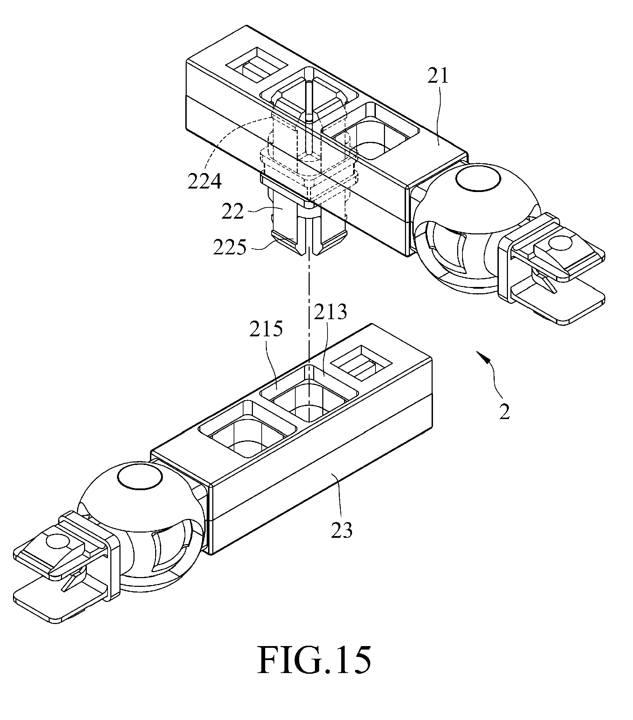

Referring further to Fig. 15, the second engaging structure 225 is inserted into the central hole section 216 of a second female component 23 that is similar to the first female component 21 in structure via the second end hole section 213 of the second female component 23, such that: the second flange 223 is retained complementarily in the second end hole section 213 and abuts against the second abutment surface 215 of the second female component 23 for preventing rotation of the male component 22 relative to the second female component 23; the resilient barbs of the second engaging structure 225 are hooked removably on the first shoulder surface 217 of the second female component 23 and the second flange 223 abuts against the second shoulder surface 218 of the second female component 23 for preventing movement of the male component 22 relative to the second female component 23. It is noted that, in this embodiment, each of the first and second engaging structures 224, 225 can be inserted into the central hole section 216 via the first or second end hole section 212, 213.

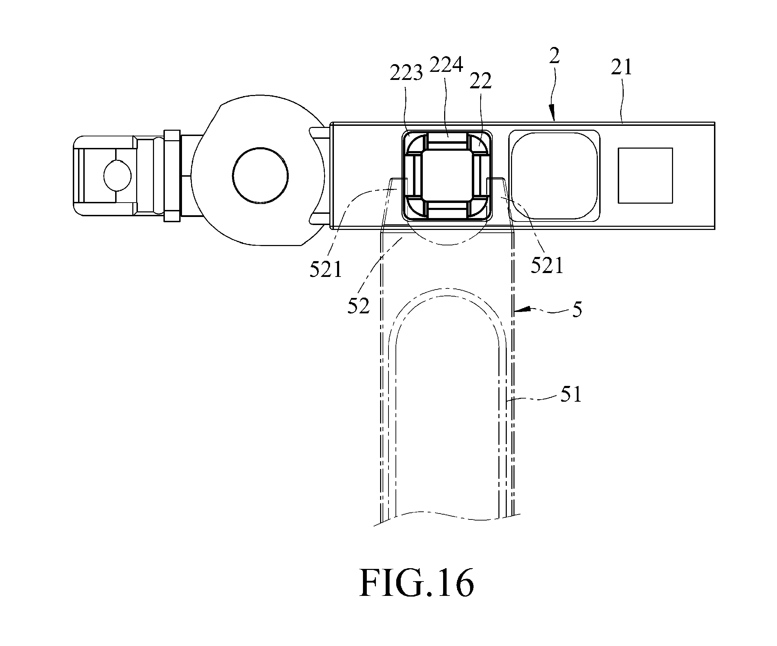

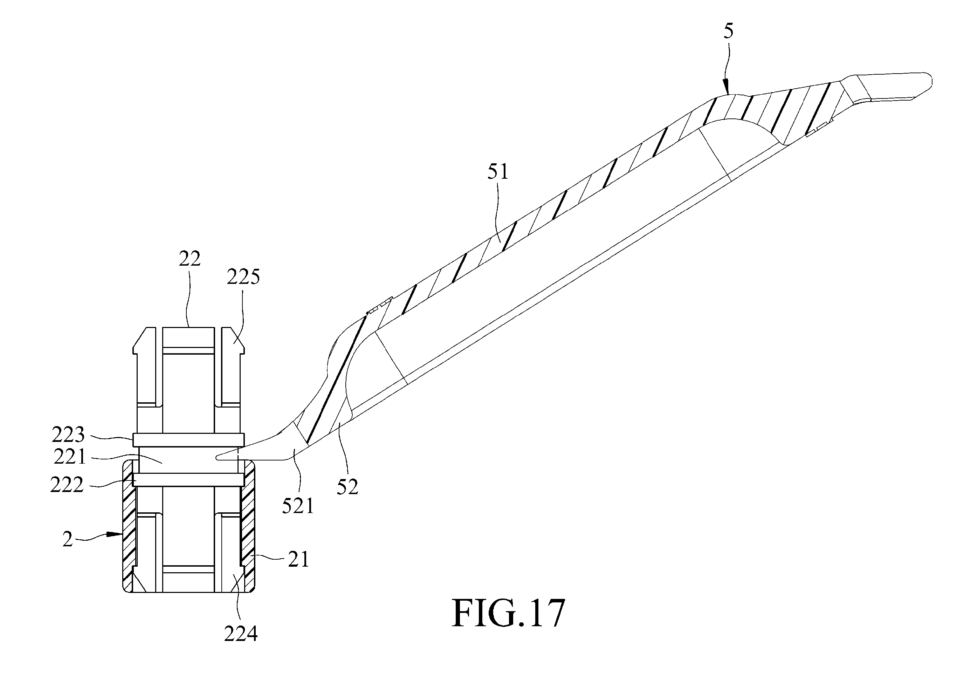

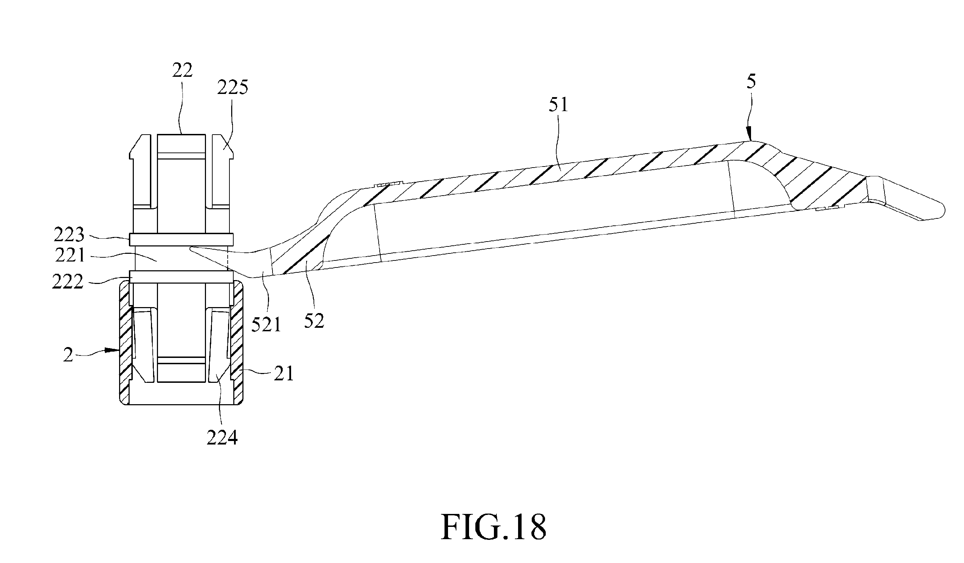

Referring further to Figs. 16 to 18, the pinch bar 5 has a bar portion 51, and a head portion 52 extending obliquely from an end of the bar portion 51. The head portion 52 includes two spaced-apart teeth 521. Since the second flange 223 is spaced apart from the first female component 21 (see Fig. 17), the teeth 521 of the pinch bar 5 are operable to be inserted into a space between the first and second flanges 222, 223, and to apply a force to the second flange 223 for separating the male component 22 from the first female component 21.

The advantages of this disclosure are as follows:
1. The outer casing 44 of the joint assembly 4 is co-rotatable with the inner casing 43 relative to the stud 40 about the first axis (L1), and is rotatable relative to the inner casing 43 about the second axis (L2), such that the outer casing 44 has two rotational degrees of freedom relative to the stud 40.
2. The outer casing 44 can be retained at a specific angle relative to the stud 40 through the engagement between the first and second positioning structures 421, 434 and between the third and fourth positioning structures 435, 443.
3. By virtue of the variety of this disclosure, a toy assembly consisting of the embodiments of this disclosure can be constructed to simulate more kinds of objects.
4. The first flange 222 is retained complementarily in the first end hole section 212 and abuts against the first abutment surface 214 for preventing rotation of the male component 22 relative to the first female component 21, so as to strengthen the connection between the male component 22 and the first female component 21.
5. The teeth 521 of the pinch bar 5 can be inserted into the space between the first and second flanges 222, 223 easily to apply a force to the second flange 223 for separating the male component 22 from the first female component 21.
6. The female and male components 21, 22 of the snap-fit connector 2 are configured to be interengaged firmly, and would not be separated easily due to an accidental impact.

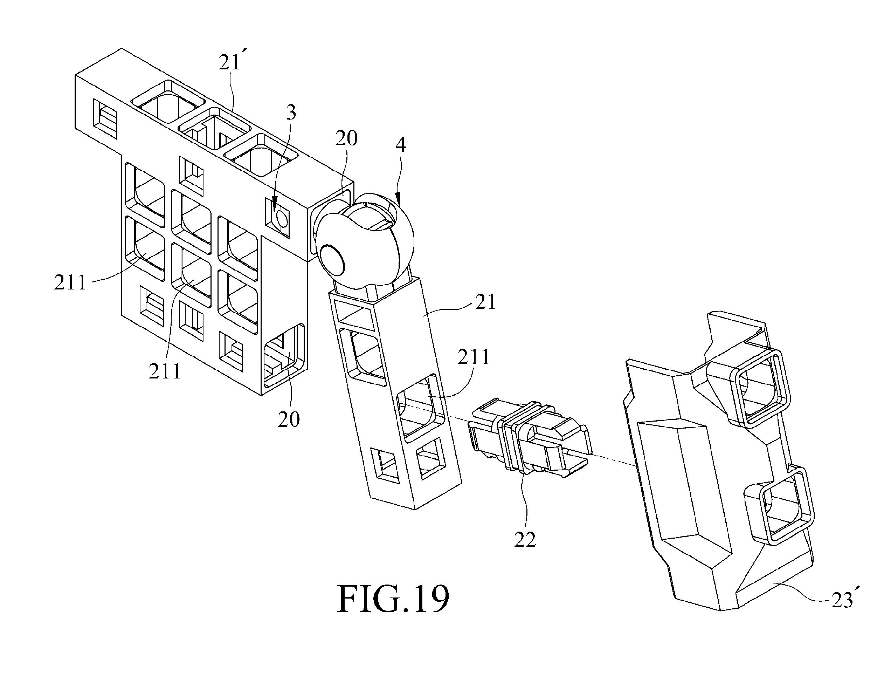

Referring to Fig. 19, a toy assembly of this disclosure includes a male component 22, a variation of the first female component 21', a variation of the second female component 23', and a joint apparatus that consists of a first female component 21, a joint assembly 4 and a connecting member 3.

The variation of the first female component 21' is like a body, and has a plurality of through holes 211 and a plurality of connecting holes 20.

The connecting member 3 of the joint apparatus engages one of the connecting holes 20 of the variation of the first female component 21', such that the joint apparatus is like a limb that is connected to the "body".

The variation of the second female component 23' is mounted to the joint apparatus by the male component 22, and is like a shield that is mounted on the "limb".

## Claims

1. A joint assembly (4) **characterized by**:
a stud (40) including a rod segment (41) and a ball segment (42), said rod segment (41) extending along a first axis (L1), and having opposite first and second ends (411, 412) that are disposed along the first axis (L1), said ball segment (42) of said stud (40) being connected co-movably to said first end (411) of said rod segment (41);
an inner casing (43) mounted around said stud (40) and rotatable relative to said stud (40) about the first axis (L1), and having a second axis (L2) that is perpendicular to the first axis (L1); and
an outer casing (44) mounted around said inner casing (43) and rotatable relative to said inner casing (43) about the second axis (L2), said second end (412) of said rod segment (41) of said stud (40) extending out from said outer casing (44).

2. The joint assembly (4) as claimed in claim 1, **characterized in that** said ball segment (42) of said stud (40) has apluralityof first positioning structures (421) arranged about the first axis (L1), said inner casing (43) having a casing body (430) and at least one second positioning structure (434) that is provided on an inner surface of said casing body (430), said second positioning structure (434) engaging removably one of said first positioning structures (421) for positioning said inner casing (43) relative to said stud (40).

3. The joint assembly (4) as claimed in claim 2, further **characterized in that** said casing body (430) has a main portion, and at least one resilient plate (436) that is connected to said main portion, said second positioning structure (434) being provided on an inner surface of said resilient plate (436).

4. The joint assembly (4) as claimed in claim 2, further **characterized in that** said inner casing (43) has a casing body (430) and at least one third positioning structure (435) that is provided on an outer surface of said casing body (430), said outer casing (44) having a plurality of fourth positioning structures (443) that are arranged about the second axis (L2), said third positioning structure (435) engaging removably one of said fourth positioning structures (443) so that said outer casing (44) is positioned relative to said inner casing (43).

5. The joint assembly (4) as claimed in claim 4, further **characterized in that** said casing body (430) has a main portion, and at least one resilient plate (436) that is connected to said main portion, said third positioning structure (435) being provided on an outer surface of said resilient plate (436).

6. The joint assembly (4) as claimed in claim 1, **characterized in that** said outer casing (44) has a casing body (440) that is formed with an arced through groove (442) centered at the second axis (L2), said through groove (442) permitting said stud (40) to extend therethrough, so as to limit the rotation of said outer casing (44) relative to said inner casing (43).

7. The joint assembly (4) as claimed in claim 1, **characterized in that** said inner casing (43) has a casing body (430), and two axle portions (431) that are disposed respectively on two opposite sides of said casing body (430) along the second axis (L2), and that extend along the second axis (L2), said outer casing (44) being connected rotatably to said inner casing (43) via said axle portions (431).

8. A snap-fit connector (2) **characterized by**:
a joint assembly (4) including a stud (40), an inner casing (43) and an outer casing (44), said stud (40) including a rod segment (41) and a ball segment (42), said rod segment (41) extending along a first axis (L1), and having opposite first and second ends (411, 412) that are disposed along the first axis (L1), said ball segment (42) of saidstud (40) being connected co-movably to said first end (411) of said rod segment (41), said inner casing (43) being mounted around said stud (40) and rotatable relative to said stud (40) about the first axis (L1), and having a second axis (L2) that is perpendicular to the first axis (L1), said outer casing (44) being mounted around said inner casing (43) and rotatable relative to said inner casing (43) about the second axis (L2), said second end (412) of said rod segment (41) of said stud (40) extending out from said outer casing (44);
a first female component (21) connected co-movably to one of said stud (40) and said outer casing (44) of said j oint assembly (4), and including a main body (210), and at least one through hole (211) that is formed through said main body (210), said through hole (211) having opposite and non-circular first and second end hole sections (212, 213), and a central hole section (216) that communicates spatially said first and second end hole sections (212, 213) and that has a size smaller than those of said first and second end hole sections (212, 213), said main body (210) having first and second abutment surfaces (214, 215) that respectively define said first and second end hole sections (212, 213) ; and
a male component (22) having a main body (221), spaced-apart first and second flanges (222, 223) that extend outwardly from said main body (221), and a first engaging structure (224) that extends from said first flange (222) and away from said second flange (223), said first engaging structure (224) being inserted into said central hole section (216) via said first end hole section (212), said first flange (222) abutting against said first abutment surface (214) for preventing rotation of said male component (22) relative to said first female component (21), said second flange (223) being spaced apart from said first female component (21).

9. The snap-fit connector (2) as claimed in claim 8, **characterized in that** said first flange (222) further abuts against a first shoulder surface (217) of said main body (210) of said first female component (21) that is formed between said first end hole section (212) and said central hole section (216), said first engaging structure (224) of said male component (22) including at least two spaced-apart resilient barbs, said resilient barbs being hooked removably on a second shoulder surface (218) of said main body (210) of said first female component (21) that is formed between said second end hole section (213) and said central hole section (216) for preventing movement of said male component (22) relative to said first female component (21) when said first engaging structure (224) is inserted into said central hole section (216) via said first end hole section (212).

10. The snap-fit connector (2) as claimed in claim 9, further **characterized by** a second female component (23) similar to said first female component (21) in structure, and said male component (22) further has a second engaging structure (225) that extends from said second flange (223) and away from said first flange (222), said second engaging structure (225) being inserted into said central hole section (216) of said second female component (23) via said second end hole section (213) of said second female component (23), such that said second flange (223) abuts against said second abutment surface (215) of said second female component (23) for preventing rotation of saidmale component (22) relative to said second female component (23).

11. The snap-fit connector (2) as claimed in claim 10, further **characterized in that** said second engaging structure (225) of said male component (22) including at least two spaced-apart resilient barbs, said resilient barbs being hooked removably on said first shoulder surface (217) of said second female component (23), and said second flange (223) abutting against said second shoulder surface (218) of said second female component (23) for preventing movement of said male component (22) relative to said second female component (23).

12. The snap-fit connector (2) as claimed in claim 11, further **characterized in that** said first and second end hole sections (212, 213) of said first female component (21) have the same shape, said first and second engaging structures (224, 225) of said male component (22) having the same configuration.

13. The snap-fit connector (2) as claimed in claim 8, further **characterized by** a connecting member (3) having a base (31) that is connected co-movably to the other one of said stud (40) and said outer casing (44) of said joint assembly (4), and two spaced-apart barbs (32) that extend from said base (31).

14. A snap-fit connector module **characterized by**:
a joint assembly (4) including a stud (40), an inner casing (43) and an outer casing (44), said stud (40) including a rod segment (41) and a ball segment (42), said rod segment (41) extending along a first axis (L1), and having opposite first and second ends (411, 412) that are disposed along the first axis (L1), said ball segment (42) of saidstud (40) being connected co-movably to said first end (411) of said rod segment (41), said inner casing (43) being mounted around said stud (40) and rotatable relative to said stud (40) about the first axis (L1), and having a second axis (L2) that is perpendicular to the first axis (L1), said outer casing (44) being mounted around said inner casing (43) and rotatable relative to said inner casing (43) about the second axis (L2), said second end (412) of said rod segment (41) of said stud (40) extending out from said outer casing (44);
a first female component (21) connected co-movably to one of said stud (40) and said outer casing (44) of said j oint assembly (4), and including a main body (210), and at least one through hole (211) that is formed through said main body (210), said through hole (211) having opposite and non-circular first and second end hole sections (212, 213), and a central hole section (216) that communicates spatially said first and second end hole sections (212, 213) and that has a size smaller than those of said first and second end hole sections (212, 213), said main body (210) having first and second abutment surfaces (214, 215) that respectively define said first and second end hole sections (212, 213);
a male component (22) having a main body (221), spaced-apart first and second flanges (222, 223) that extend outwardly from said main body (221), and a first engaging structure (224) that extends from said first flange (222) and away from said second flange (223), said first engaging structure (224) being inserted into said central hole section (216) via said first end hole section (212), said first flange (222) abutting against said first abutment surface (214) for preventing rotation of said male component (22) relative to said first female component (21), said second flange (223) being spaced apart from said first female component (21); and
a pinch bar (5) operable to be inserted into a space between said first and second flanges (222, 223), and to apply a force to said second flange (223) for separating said male component (22) from said first female component (21).

15. The snap-fit connector module as claimed in claim 14, **characterized in that** said pinch bar (5) has a bar portion (51) and a head portion (52) extending obliquely from an end of said bar portion (51), said head portion (52) including two spaced-apart teeth (521) for being inserted into the space between said first and second flanges (222, 223).
